# EUROPÄISCHE PATENTANMELDUNG

(11) **EP 1 867 522 A2**
(43) Veröffentlichungstag der Anmeldung: **19.12.2007**
(21) Anmeldenummer: 07011022.6
(22) Anmeldetag: 01.06.2007
(51) Int. Cl.: B60P 3/39

(54) **Einbauschlafmöbel zum Einbau in Kastenwagen, Wohnmobilen und dergleichen**

(30) Priorität: 14.06.2006 DE 202006009505 U
(71) Anmelder: REIMO Reisemobil-Center GmbH, 63329 Egelsbach (DE)
(72) Erfinder: Holona, Günter, 63329 Egelsbach (DE)
(74) Vertreter: Katscher Habermann Patentanwälte

(57) **Zusammenfassung**

Ein Einbauschlafmöbel zum Einbau in Kastenwagen, Wohnmobilen und dergleichen, wobei das Einbauschlafmöbel quer zur Fahrtrichtung in dem Kastenwagen (1) anbringbar ist, weist eine mehrteilige Matratzenunterlage (2) und eine mehrteilige Matratze (4)auf, wobei die Matratzenunterlage (3) ein nach oben verschwenkbares Matratzenunterlage-Element (8) aufweist. Das verschwenkbare Matratzenunterlage-Element (8) ist schwenkbar mit einem dauerhaft in dem Kastenwagen (1) befestigten ersten Matratzenunterlage-Endelement (7) verbunden. Die Matratzenunterlage (3) weist ein zweites Matratzenunterlage-Endelement (9) auf, das dauerhaft in den Kastenwagen (1) so angeordnet und befestigt ist, dass das verschwenkbare Matratzenunterlage-Element (8) eng an das zweite Matratzenunterlage-Endelement (9) anliegend verschwenkt werden kann, um eine durchgehende, mehrteilige Matratzenunterlage (3) zu bilden. Die Matratzenunterlage-Endelemente (7, 9) sind jeweils auf der Oberseite von seitlich in dem Kastenwagen (1) angeordneten Einbauunterschränken (5) befestigbar und die Abmessungen der Matratzenunterlage-Endelemente (7, 9) sind an die Abmessungen der Einbauunterschränke (5) angepasst.
Das verschwenkbare Matratzenunterlage-Element (8) in einer nach oben verschwenkten Endposition arretierbar ist.

## Beschreibung

Die Erfindung betrifft ein Einbauschlafmöbel zum Einbau in Kastenwagen, Wohnmobilen und dergleichen mit einer mehrteiligen Matratzenunterlage und einer mehrteiligen Matratze, wobei das Einbauschlafmöbel quer zur Fahrtrichtung in dem Kastenwagen anbringbar ist.

Um in größeren Kraftfahrzeugen es den Benutzern zu ermöglichen, gelegentlich oder auch über einen längeren Zeitraum hinweg in dem Kraftfahrzeug zu übernachten ist es bekannt, ein an das betreffende Kraftfahrzeug angepasstes Einbauschlafmöbel in das Kraftfahrzeug einzubauen. Dieser Einbau kann entweder bereits serienmäßig vorgesehen sein, wie es beispielsweise für Wohnmobile, Wohnanhänger oder Wohnwagen zweckmäßig ist, oder aber nachträglich eingebaut werden, beispielsweise in Kastenwagen, die in gleicher Bauart auch als Lastentransporter oder als Personenbeförderungsfahrzeug angeboten werden.

Um einen hohen Schlafkomfort gewährleisten zu können ist es erforderlich, dass das Einbauschlafmöbel eine stabile Matratzenunterlage und eine ausreichend dicke Matratze aufweist. Um die außerhalb der Schlafenszeiten zur Verfügung stehende Nutzfläche in dem Kraftfahrzeug vorteilhaft ausnutzen zu können ist es üblich, dass die Position des einteilig oder mehrteilig ausgeführten Schlafmöbels verändert werden kann.

So ist es beispielsweise aus der Praxis bekannt, dass ein in Fahrtrichtung angeordnetes Einbauschlafmöbel mittels eines Hub- oder Schwenkmechanismus unmittelbar unter das Dach des Kraftfahrzeugs verschoben oder verschwenkt werden kann. Um das Einbauschlafmöbel zum Schlafen benutzen zu können muss es in den Innenraum des Kraftfahrzeugs abgesenkt werden können. Der hierfür erforderliche Verstellmechanismus ist konstruktiv aufwändig und kostspielig. Die meisten Innenräume derartiger Kraftfahrzeuge sind ohne zusätzliches Hochdach oder Ausstelldach nicht so hoch, dass die Benutzer im Innenraum bequem stehen können, wenn das Einbauschlafmöbel unter das Dach des Kraftfahrzeugs verstellt ist.

Derartige Hub- oder Schwenkvorrichtungen sind bislang nur in Verbindung mit in Fahrtrichtung ausgerichteten Einbauschlafmöbeln bekannt. Regelmäßig ebenfalls im Innenraum des Kraftfahrzeugs angebrachte Oberschränke lassen es nicht zu, dass ein bekanntes Einbauschlafmöbel quer zur Fahrtrichtung eingebaut und nach oben verschoben oder verschwenkt werden kann.

Auch bei fehlenden Oberschränken erschwert eine im Dachbereich oftmals nicht ausreichend große Fahrzeugbreite das Verschieben oder Verschwenken eines quer zur Fahrtrichtung angeordneten Einbauschlafmöbels unter das Dach.

Es ist aus der Praxis auch bekannt, mehrere einzelne plattenartige Elemente im Heckbereich eines Kraftfahrzeugs so anzuordnen, dass die aneinander angrenzenden Elemente eine Matratzenunterlagen bilden, auf welche eine einteilige oder gegebenenfalls mehrteilige Matratze aufgelegt werden kann. Die einzelnen plattenartigen Elemente können beispielsweise auf einem ebenfalls herausnehmbaren oder zerlegbaren Rahmen oder auf seitlichen Auflageflächen aufgelegt und angeordnet werden. Wird das Einbauschlafmöbel nicht zum Schlafen benutzt, so können die einzelnen plattenartigen Elemente herausgenommen und beispielsweise übereinander gestapelt verstaut werden. Die einteilige oder mehrteilige Matratze kann ebenfalls im Innenraum des Kraftfahrzeugs verstaut werden.

Derartige bekannte aus mehreren Elementen bestehende Einbauschlafmöbel, die längs oder quer zur Fahrtrichtung in einem Kastenwagen oder einem Wohnmobil angeordnet werden können, bieten üblicherweise nur einen eingeschränkten Schlafkomfort. Die oftmals als Holzplatten oder Kunststoffplatten ausgestalteten Auflagen-Elemente, auf welche die Matratze aufgelegt werden kann, sind üblicherweise biegesteif und können keine während des Schlafens angenehme Feder- oder Dämpfungswirkung ausüben.

Die in Verbindung mit derartigen Elementen vorgesehene Matratze ist regelmäßig in mehrere Segmente unterteilt, um ein einfaches Verstauen der mehrteiligen Matratze zu ermöglichen. Die Stoßfugen zwischen den einzelnen Matratzensegmenten bewirken ebenfalls eine nachteilige Beeinträchtigung des Schlafkomforts. Zudem müssen sowohl die Auflageelemente als auch die einzelnen Matratzensegmente in der Schlafposition arretierbar sein, um ein ungewolltes Verrutschen einzelner Elemente, beziehungsweise Segmente während der Benutzung verhindern zu können.

Aufgabe der vorliegenden Erfindung ist demzufolge, ein Einbauschlafmöbel zum Einbau in Kastenwagen, Wohnmobilen und dergleichen der eingangs genannten Gattung so auszugestalten, dass ein hoher Schlafkomfort gewährleistet ist und das Einbauschlafmöbel bei Nichtbenutzung so verräumt werden kann, dass ein möglichst großer frei zugänglicher Nutzraum entsteht.

Diese Aufgabe wird erfindungsgemäß dadurch gelöst, dass die Matratzenunterlage ein nach oben verschwenkbares Matratzenunterlagen-Element aufweist. In der nach oben verschwenkten geöffneten Endposition gibt das zweckmäßigerweise möglichst breit gestaltete verschwenkbare Matratzenunterlagen-Element einen Großteil der Nutzfläche des Innenraums des Kraftfahrzeugs frei. Da das Matratzenunterlage-Element im Wesentlichen hochkant an einer Seite des Innenraums angeordnet und verstaut sein kann wird die nutzbare Raumhöhe im Innenraum des Kraftfahrzeugs nicht vermindert, so dass ein bequemer Zugang und das Begehen des Nutzraums in einfacher Weise möglich sind.

Da keine einzelnen Elemente oder Segmente des Einbauschlafmöbels herausgenommen und separat verstaut werden müssen, lässt sich das Einbauschlafmöbel mit wenigen Handgriffen aus einer Schlafposition in eine geöffnete und den Nutzraum weitgehend freigebende Position verräumt werden kann.

Auch in kleineren Wohnmobilen oder als Wohnmobil ausgebauten Kastenwagen können im nach oben verschwenkten Zustand des Matratzenunterteil-Elements in der dadurch freigegebenen Nutzfläche größere Gegenstände wie beispielsweise ein Fahrrad oder dergleichen transportiert und auf längeren Reisen mitgenommen werden.

Vorzugsweise ist vorgesehen, dass das verschwenkbare Matratzenunterteil-Element schwenkbar mit einem dauerhaft in dem Kastenwagen befestigten ersten Matratzenunterteil-Endelement verbunden ist. Das erste Matratzen-Endelement ist zweckmäßigerweise seitlich in Höhe der vorgesehenen Schlafposition an dem Kastenwagen oder mit den in diesem Bereich vorgesehenen Einbaumöbeln fest verbunden. Auf diese Weise ist auch das verschwenkbare Matratzen-Unterteilelement in der geöffneten Position wie auch in der Schlafposition festgelegt, so dass ein ungewolltes Verrutschen der miteinander verbundenen Matratzenunterlage-Elemente ausgeschlossen ist.

Einer besonders vorteilhaften Ausgestaltung des Erfindungsgedankens zufolge ist daher vorgesehen, dass die Matratzenunterlage ein zweites Matratzenunterlage-Endelement aufweist, dass dauerhaft in dem Kastenwagen so angeordnet und befestigt ist, dass das verschwenkbare Matratzenunterteil-Element eng an das zweite Matratzenunterteil-Element anliegend verschwenkt werden kann, um eine durchgehende, mehrteilige Matratzenunterlage zu bilden. Die beiden Matratzenunterlagen-Endelemente bilden ein Kopf- und ein Fußteil der Matratzenunterlage. Das in der Mitte angeordnete, mit dem ersten Matratzenunterlage-Endelement schwenkbar verbundene verschwenkbare Matratzenunterlage-Element bildet einen mittleren Bereich der Matratzenunterlage.

Die Länge des verschwenkbaren Matratzenunterlage-Elements ist so angepasst, dass das verschwenkbare Matratzenunterlage-Element auch bei üblicherweise in derartigen Kastenwagen oder Wohnmobilen angebrachten Oberschränken bis in eine nahezu senkrechte Stellung nach oben verschwenkt werden kann. Die beiden Matratzenunterlage-Endelemente können dann an die Breite üblicher Einbauunterschränke angepasst werden, die von den Matratzenunterlage-Endelementen abgedeckt werden können.

Um beispielsweise während der Fahrt oder tagsüber eine möglichst große, frei begehbare Nutzfläche zu ermöglichen und das verschwenkbare Matratzenunterlage-Element in der nach oben verschwenkten Stellung zuverlässig zurückhalten bzw. festlegen zu können, ist vorgesehen, dass das verschwenkbare Matratzenunterteil-Element in einer nach oben verschwenkten Endposition arretierbar ist. Dies kann mit den üblichen Befestigungsmitteln wie beispielsweise mit Rastelementen oder mit Haltegurten in einfacher Weise bewirkt werden.

Um einen möglichst großen Schlafkomfort bieten zu können ist in vorteilhafter Weise vorgesehen, dass die Matratzenunterlage ein mehrteilig ausgestalteter Lattenrost ist. Lattenroste werden in derartigen Einbauschlafmöbeln bislang nur bei einteiligen Matratzenunterlagen verwendet, die üblicherweise unter das Fahrzeugdach angehoben oder verschwenkt werden können. Die aus der Praxis bekannten mehrteiligen plattenartigen Matratzenunterlagen bestehen oftmals aus sechs oder mehr einzelnen Segmenten, damit diese raumsparend herausgenommen und verräumt werden können. Die plattenartigen Segmente erlauben keine zweckmäßige Ausgestaltung als Lattenrost, insbesondere wenn wie üblich die Matratzenunterlage aus Platzgründen auch in Längsrichtung unterteilt ist.

In Abhängigkeit von der Größe der Matratzenunterlage-Endelemente kann es zweckmäßig und für den gewünschten Schlafkomfort ausreichend sein, wenn lediglich das verschwenkbare Matratzenunterlage-Element und gegebenenfalls ein weiteres Matratzenunterlage-Endelement als Lattenrost ausgestaltet sind.

Ebenfalls im Hinblick auf den gewünschten hohen Schlafkomfort ist es vorteilhaft, wenn die Matratze ein erstes langes Matratzenelement, welches das erste Matratzenunterlage-Endelement und das damit verbundene verschwenkbare Matratzenunterlage-Element bedeckt, und ein zweites kurzes, das zweite Matratzenunterlage-Endelement bedeckendes Matratzen-Element aufweist. Der üblicherweise weitaus größere Bereich der Matratze kann bei einem Verschwenken des verschwenkbaren Matratzenunterlage-Elements in eine im Wesentlichen senkrechte Endposition auf diesem verschwenkbaren Matratzenunterlage-Element anliegend verbleiben und wird ebenfalls nach oben verschwenkt. Es ist nicht erforderlich, vor dem Verschwenken der Matratzenunterlage in die geöffnete Stellung zuerst die darauf befindliche Matratze abzunehmen und gesondert zu verstauen. Das zweite Matratzenelement, welches auf dem zweiten Matratzenunterlage-Endelement aufliegt, kann entweder dort verbleiben oder abgenommen und auf das erste Matratzenunterlage-Element gelegt oder in diesen Bereich verstaut werden.

Das Verschwenken des auf dem verschwenkbaren Matratzenunterlage-Element befindlichen Bereichs der Matratze zu erleichtern und auch bei häufiger Benutzung eine Funktionsbeeinträchtigung oder Beschädigung der Matratze zu vermeiden ist vorgesehen, dass das erste lange Matratzenelement eine in einem Übergangsbereich von dem ersten Matratzenunterlage-Endelement zu dem damit verbundenen verschwenkbaren Matratzenunterlage-Element angeordnete Biegenaht aufweist. Die Matratze kann in diesem Bereich beispielsweise eine durchgehende Absteppung aufweisen oder aber bis auf eine durchgehende Oberseite abgenäht und im Wesentlichen in zwei Teilbereiche unterteilt sein. Die beiden Teilbereiche des ersten langen Matratzenelements können auch getrennt ausgestaltet und lösbar miteinander verbindbar sein.

Nachfolgend wird ein Ausführungsbeispiel näher erläutert, welches in der Zeichnung dargestellt ist. Es zeigt:
Fig. 1 eine schematische Schnittansicht eines von der Rückseite betrachteten Kastenwagens mit einem darin quer zur Fahrtrichtung angeordneten Einbauschlafmöbel in der Schlafposition und
Fig. 2 eine schematische Ansicht des Kastenwagens gemäß Fig. 1, wobei das Einbau-Schlafmöbel in einer geöffneten, den Nutzraum weitgehend freigebenden Stellung dargestellt ist.

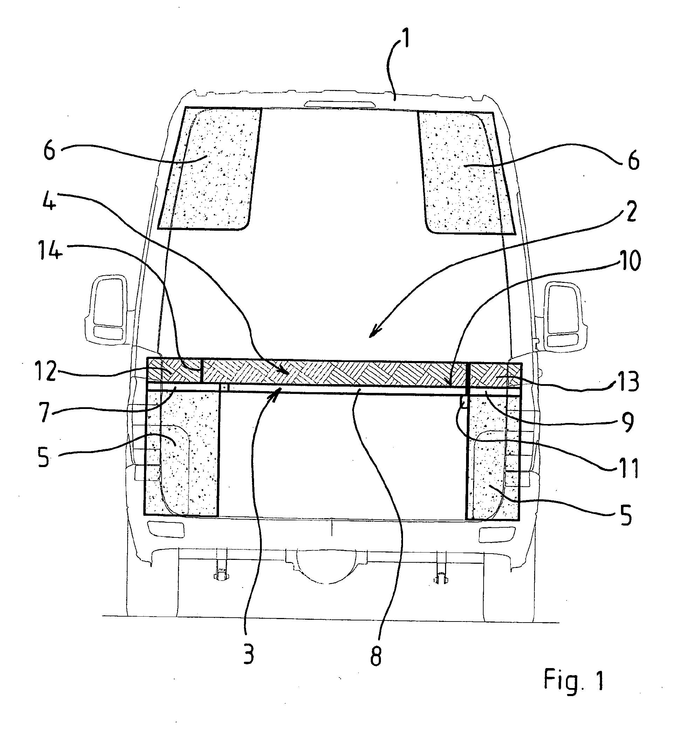

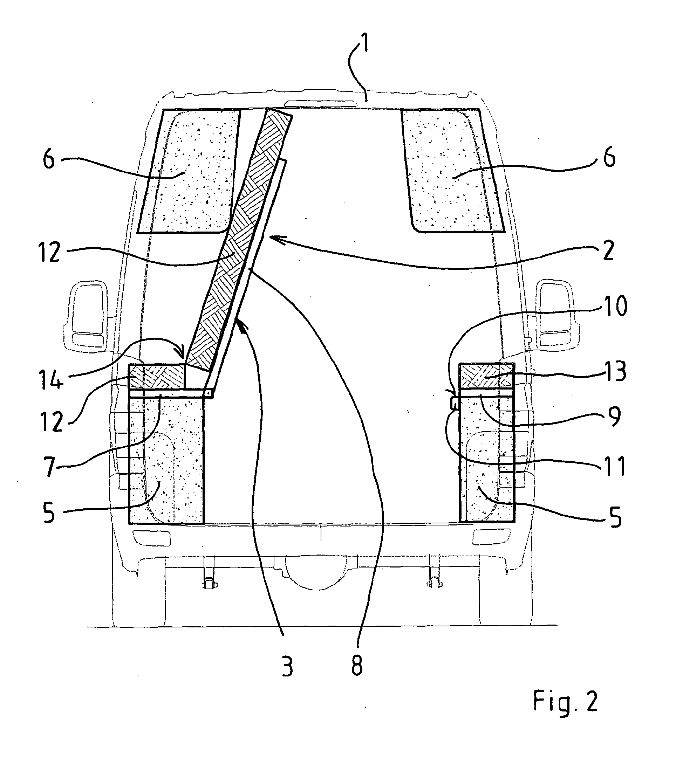

In den beiden Figuren 1 und 2 ist schematisch eine Schnittansicht eines von hinten betrachteten Kastenwagens 1 dargestellt. Der Kastenwagen 1 wird lediglich exemplarisch für die Abbildungen verwendet. An Stelle des Kastenwagens 1 könnte auch ein Wohnmobil, ein Wohnanhänger oder ein sonstiges Kraftfahrzeug dargestellt sein, welches verräumbare, nicht dauerhaft angeordnete Übernachtungsmöglichkeiten bieten soll.

In dem Kastenwagen 1 ist im hinteren Bereich quer zur Fahrtrichtung ein Einbauschlafmöbel 2 eingepasst und angebracht. Das Einbauschlafmöbel 2 besteht aus einer mehrteiligen Matratzenunterlage 3 und einer darauf angeordneten, ebenfalls mehrteiligen Matratze 4. Das Einbauschlafmöbel 2 ist jeweils seitlich auf Einbauchunterschränken 5 angeordnet und mit diesen befestigt. In dem Kastenwagen 1 sind ebenfalls seitlich unter der Decke angeordnete und befestigte Einbauoberschränke 6 vorgesehen.

Die Matratzenunterlage 3 ist in ein erstes Matratzenunterlage-Endelement 7, ein damit schwenkbar verbundenes verschwenkbares Matratzenunterlage-Element 8 und in ein davon getrennt ausgestaltetes zweites Matratzenunterlage-Endelement 9 unterteilt. Das erste Matratzenunterlage-Endelement 7 ist bei dem gezeigten Ausführungsbeispiel in Fahrtrichtung gesehen links auf dem zugeordneten Einbauunterschrank 5 angeordnet und mit diesem befestigt. Das zweite Matratzenunterlage-Endelement 9 ist auf dem gegenüberliegenden Einbauunterschrank 5 angeordnet und mit diesem befestigt. Das dazwischen befindliche verschwenkbare Matratzenunterlage-Endelement 8 ist über ein Scharnier oder eine geeignete Schwenkverbindung schwenkbar mit dem ersten Matratzenunterlage-Endelement 7 verbunden. Auf der gegenüberliegenden Seite ist im Bereich des zweiten Matratzenunterlage-Endelements 9 eine Auflagefläche 10 in Form eines seitlich an dem Einbauunterschrank 5 befestigten Anschlags 11 vorgesehen. Das verschwenkbare Matratzenunterlage-Element 8 kann nach unten in eine Schlafposition verschwenkt werden, in welcher das verschwenkbare Matratzenunterlage-Element 8 dicht an das benachbarte zweite Matratzenunterlage-Endelement 9 anliegend auf der Auflagefläche 10 aufliegt und in dieser Stellung festgelegt ist. Um eine möglichst große begehbare Nutzfläche im Innenraum des Kastenwagens 1 zu ermöglichen kann das verschwenkbare Matratzenunterteil-Element 8 aus der in Fig. 1 dargestellten Schlafposition nach oben in eine im Wesentlichen senkrecht geöffnete Endstellung verschwenkt werden, wie in Fig. 2 dargestellt. In dieser geöffneten Endstellung kann das verschwenkbare Matratzenunterlage-Element 8 an dem zugeordneten Einbauoberschrank 6 befestigt oder in diesem Bereich an anderer Stelle oder mit geeigneten Befestigungsmitteln arretiert werden.

Auf der mehrteiligen Matratzenunterlage 3 befindet sich eine ebenfalls mehrteilige Matratze 4a. Die Matratze ist in zwei getrennte Matratzenelemente 12, 13 unterteilt. Das erste lange Matratzenelement 12 bedeckt im Wesentlichen das erste Matratzenunterlage-Endelement 7 und das damit verbundene verschwenkbare Matratzenunterlage-Element 8. Das erste Matratzenelement 12 weist eine Biegenaht 14 auf, die im Übergangsbereich von dem ersten Matratzenunterlage-Endelement 7 zu dem damit verbundenen verschwenkbaren Matratzenunterlage-Element 8 angeordnet ist. In dem gezeigten Ausführungsbeispiel wird das erste Matratzenelement 2 durch die Biegenaht 14 in zwei Teilbereiche unterteilt, die an der Oberseite dauerhaft miteinander verbunden sind.

Die Matratzenunterlage-Endelemente 7, 9 sind jeweils auf der Oberseite von den seitlich im Kastenwagen 1 angeordneten Einbauunterschränken 5 befestigbar und die Abmessungen der Matratzenunterlage-Endelemente 7, 9 sind an die Abmessungen der Einbauunterschränke 5 angepasst. Bei den üblichen Abmessungen für derartige Einbauunterschränke 5 und Einbauoberschränke 6 ergibt sich dabei eine Länge des verschwenkbaren Matratzenunterlage-Elements 8, die einerseits einen möglichst großen, frei begehbaren Nutzraum in dem Inneren des Kastenwagens 1 in geöffneter Stellung freigibt und andererseits ein ungehindertes Verschwenken des verschwenkbaren Matratzenunterlage-Elements 8 nach oben an den Einbauoberschränken 6 vorbei ermöglicht. Das größtenteils auf dem verschwenkbaren Matratzenunterlagen-Element 8 angeordnete erste Matratzenelement 12 wird zusammen mit dem verschwenkbaren Matratzenunterlagen-Element 8 nach oben verschwenkt und in dieser geöffneten Stellung arretiert.

Die Matratzenunterlage 3, bzw. die einzelnen Matratzenunterlage-Elemente 7, 8 und 9 sind jeweils als Lattenrost ausgestaltet.

## Patentansprüche

1. Einbauschlafmöbel zum Einbau in Kastenwagen, Wohnmobilen und dergleichen, mit einer mehrteiligen Matratzenunterlage (2) und einer mehrteiligen Matratze (4), wobei das Einbauschlafmöbel quer zur Fahrtrichtung in dem Kastenwagen (1) anbringbar ist, **dadurch gekennzeichnet, dass** die Matratzenunterlage (3) ein nach oben verschwenkbares Matratzenunterlage-Element (8) aufweist.

2. Einbauschlafmöbel nach Anspruch 1, **dadurch gekennzeichnet, dass** das verschwenkbare Matratzenunterlage-Element (8) schwenkbar mit einem dauerhaft in dem Kastenwagen (1) befestigten ersten Matratzenunterlage-Endelement (7) verbunden ist.

3. Einbauschlafmöbel nach Anspruch 1 oder Anspruch 2, **dadurch gekennzeichnet, dass** die Matratzenunterlage (3) ein zweites Matratzenunterlage-Endelement (9) aufweist, das dauerhaft in den Kastenwagen (1) so angeordnet und befestigt ist, dass das verschwenkbare Matratzenunterlage-Element (8) eng an das zweite Matratzenunterlage-Endelement (9) anliegend verschwenkt werden kann, um eine durchgehende, mehrteilige Matratzenunterlage (3) zu bilden.

4. Einbauschlafmöbel nach einem der vorangegangen Ansprüche, **dadurch gekennzeichnet, dass** die Matratzenunterlage-Endelemente (7, 9) jeweils auf der Oberseite von seitlich in dem Kastenwagen (1) angeordneten Einbauunterschränken (5) befestigbar sind und die Abmessungen der Matratzenunterlage-Endelemente (7, 9) an die Abmessungen der Einbauunterschränke (5) angepasst sind.

5. Einbauschlafmöbel nach einem der vorangegangen Ansprüche, **dadurch gekennzeichnet, dass** das verschwenkbare Matratzenunterlage-Element (8) in einer nach oben verschwenkten Endposition arretierbar ist.

6. Einbauschlafmöbel nach einem der vorangegangen Ansprüche, **dadurch gekennzeichnet, dass** die Matratzenunterlage (3) ein mehrteilig ausgestalteter Lattenrost ist.

7. Einbauschlafmöbel nach einem der Ansprüche 2 bis 6, **dadurch gekennzeichnet, dass** die Matratze (4) ein erstes langes, das erste Matratzenunterlage-Endelement (7) und das damit verbundene verschwenkbare Matratzenunterlage-Element (8) bedeckendes Matratzenelement (12) und ein zweites kurzes, das zweite Matratzenunterlage-Endelement (9) bedeckendes Matratzenelement (13) aufweist.

8. Einbauschlafmöbel nach Anspruch 7, **dadurch gekennzeichnet, dass** das erste lange Matratzenelement (12) eine in einem Übergangsbereich von dem ersten Matratzenunterlage-Endelement (7) zu dem damit verbundenen verschwenkbaren Matratzenunterlagen-Element (8) angeordnete Biegenaht (14) aufweist.
